Europäisches Patentamt

European Patent Office

Office européen des brevets

(19)

(11) **EP 1 075 968 B1**

(12) **FASCICULE DE BREVET EUROPEEN**

(45) Date de publication et mention
de la délivrance du brevet:
**01.10.2003 Bulletin 2003/40**

(51) Int Cl.⁷: **B60C 9/22**, B60C 9/00

(21) Numéro de dépôt: **00114211.6**

(22) Date de dépôt: **03.07.2000**

(54) **Pneumatique à performance de bruit de roulement améliorée**

Reifen mit verbesserter Rollgeräuschleistung

Tyre with enhanced rolling noise performance

(84) Etats contractants désignés:
**AT BE CH CY DE DK ES FI FR GB GR IE IT LI LU
MC NL PT SE**

(30) Priorité: **07.08.1999 FR 9908901**

(43) Date de publication de la demande:
**14.02.2001 Bulletin 2001/07**

(73) Titulaires:
• **Sociéte de Technologie Michelin
63000 Clermont-Ferrand Cedex 09 (FR)**
• **MICHELIN RECHERCHE ET TECHNIQUE S.A.
CH-1763 Granges-Paccot (CH)**

(72) Inventeurs:
• **Jardine, David
63000 Clermont-Ferrand (FR)**
• **Costa Pereira, Pedro
63000 Clermont-Ferrand (FR)**
• **Esnault, Philippe
63100 Clermont-Ferrand (FR)**
• **Goutte, Jean-Claude
63000 Clermont-Ferrand (FR)**
• **Vizet, Francois
63430 Pont-du-Chateau (FR)**

(74) Mandataire: **Dequire, Philippe Jean-Marie Denis
Michelin & Cie,
Service SGD/LG/PI-LAD
63040 Clermont Ferrand Cedex 09 (FR)**

(56) Documents cités:
**EP-A- 0 335 588          EP-A- 0 467 585
EP-A- 0 661 179          DE-A- 4 135 599
US-A- 4 140 168          US-A- 4 333 507
US-A- 5 373 885**

• **PATENT ABSTRACTS OF JAPAN vol. 018, no.
292 (M-1615), 3 juin 1994 (1994-06-03) & JP 06
055907 A (BRIDGESTONE CORP), 1 mars 1994
(1994-03-01)**
• **PATENT ABSTRACTS OF JAPAN vol. 011, no.
102 (M-576), 31 mars 1987 (1987-03-31) & JP 61
249804 A (BRIDGESTONE CORP), 7 novembre
1986 (1986-11-07)**

## Description

L'invention concerne un pneumatique pour véhicule et notamment un pneumatique dont l'architecture est optimisée pour réduire les bruits de roulement tout en maintenant un haut niveau de performance en vitesse limite.

En roulant sur les chaussées, les pneumatiques des véhicules produisent des bruits de roulement dus, notamment, aux chocs des arêtes des sculptures sur la chaussée, aux vibrations de l'air comprimé dans les sillons de la sculptures des pneumatiques, ainsi qu'aux vibrations de la structure.

Les constructeurs d'automobiles, de même que le législateur, cherchent à diminuer en permanence l'émission de bruit des véhicules en roulage.

On s'intéresse ici au bruit à basse vitesse, c'est-à-dire à une vitesse inférieure ou égale à 90 km/h par exemple.

La contribution du pneumatique n'est en effet véritablement sensible qu'aux basses vitesses. En effet, au-delà d'un certain seuil, les bruits du moteur, de la transmission ou les effets aérodynamiques deviennent prépondérants.

De nombreux efforts ont été faits pour réduire le bruit de roulement des pneumatiques. A titre d'exemple, on peut citer le brevet US 3 023 789 qui propose de modifier le pas des profils des sculptures ou FR 2 630 374 qui propose de réaliser la surface extérieure du pneumatique avec une rugosité comprise entre 100 et 2000 micromètres.

Par ailleurs, les constructeurs automobiles développent des véhicules aux performances toujours accrues dont en particulier, la vitesse maximale. Ainsi, les clients demandent des pneumatiques silencieux avec une résistance à la vitesse accrue, et ceci toujours au moindre coût.

Le document EP-A-661 179 qui correspond au préambule de la revendication indépendante présente un pneumatique comportant un sommet prolongé par deux flancs et deux bourrelets, une carcasse ancrée dans les deux bourrelets, le sommet comprenant :

- au moins une nappe de renforcement composée de renforts parallèles et orientés selon un angle $\alpha$ relativement à la direction circonférentielle, et
- au moins une nappe de renforts orientés circonférentiellement enroulés en hélice,

dans lequel les renforts orientés circonférentiellement sont des renforts textiles hybrides nylon-aramide tels qu'ils ont une faible résistance à la traction aux faibles déformations (2%) et une haute résistance à la traction aux hautes déformations (>6%) pour faciliter leur expansion pendant la fabrication du pneumatique et limiter leur contraction après la vulcanisation du pneumatique. Ce document revendique un pneumatique de poids réduit tout en conservant un bon comportement et une bonne résistance à haute vitesse.

L'invention a pour objet un pneumatique dont les performances de bruit de roulement et de résistance à haute vitesse de roulage sont améliorées.

Dans ce qui suit, on entend par titre, la masse en grammes de mille mètres d'un renfort. Le titre est exprimé en tex. La contrainte subie par un renfort ou le module de ce renfort sont exprimés en « cN/tex », cN voulant dire centinewton.

Dans ce qui suit, on entend par «renfort» («reinforcing thread») tout élément de renforcement sous forme d'un fil, susceptible de renforcer une matrice déterminée, par exemple une matrice de caoutchouc. A titre de renforts, on citera par exemple des fibres multifilamentaires (« multifilament yarns »), ces fibres pouvant être tordues ou non sur elles-mêmes, des fils unitaires tels que des monofils de diamètre élémentaire élevé, avec ou sans torsion sur eux-mêmes, des câblés ou des retors (« cords ») obtenus par des opérations de câblage ou retordage de ces fils unitaires ou de ces fibres, de tels renforts pouvant être hybrides, c'est-à-dire composites, comportant des éléments de natures différentes.

On entend par « retors» (« plied yarn » ou « folded yarn ») un renfort constitué par deux brins (« single yarns ») ou plus assemblés ensemble par des opérations de retordage ; ces brins, généralement formés de fibres multifilamentaires, sont d'abord retordus individuellement dans un sens (direction de torsion S ou Z) au cours d'une première étape de retordage, puis tordus ensemble en sens inverse (direction de torsion Z ou S, respectivement) au cours d'une seconde étape de retordage.

On entend par « renfort adhérisé » un renfort ayant subi un traitement d'enduction approprié, dit d'encollage ou d'adhérisation, susceptible de faire adhérer ce renfort, après un traitement thermique approprié, à la matrice à laquelle il est destiné.

L'invention a pour objet un pneumatique comportant un sommet prolongé par deux flancs et deux bourrelets, une carcasse ancrée dans les deux bourrelets, dans lequel le sommet comprend au moins une nappe de renforcement composée de renforts parallèles et orientés selon un angle $\alpha$ relativement à la direction circonférentielle compris entre 10 et 45 degrés, et au moins une nappe de renforts textiles orientés circonférentiellement enroulés en hélice. Ce pneumatique est caractérisé en ce que, extraits du pneumatique vulcanisé, les renforts orientés circonférentiellement possèdent un module initial inférieur à 900 cN/tex et développent une contrainte sous 3 % de déformation supérieure à 12 cN/tex et préférentiellement, extraits du pneumatique vulcanisé, les renforts orientés circonférentiellement ont, quelle que soit leur position axiale, un potentiel de contraction à chaud (CS) inférieur ou égal au potentiel de contraction à chaud des renforts avant leur incorporation dans le pneumatique.

La demanderesse a constaté que l'utilisation d'une telle nappe de renforts, orientés sensiblement circonférentiellement, permet d'obtenir une diminution marquée du bruit de roulement du pneumatique associée à un haut niveau de résistance à la vitesse. Cette diminution peut atteindre 1dB(A).

L'invention a aussi pour objet un procédé de fabrication d'un pneumatique selon la revendication 23. Dans ce procédé, les renforts orientés circonférentiellement sont enroulés en hélice avec des diamètres d'hélice de pose correspondant sensiblement, sur toute la largeur du sommet, aux diamètres d'hélice finaux des renforts dans le pneumatique après vulcanisation.

Les renforts posés circonférentiellement avec des diamètres de pose s'écartant, sur toute la largeur du sommet, de moins de 0,5 % des diamètres finaux de ces renforts dans le pneumatique après vulcanisation, ne subissent au cours de la confection du pneumatique ou de sa vulcanisation aucune opération de conformation notable. Une telle conformation notable entraînerait, par exemple, lors de la confection ou vulcanisation, une extension locale de ces renforts supérieure à 2 ou 3 %. Cette extension affecte généralement les propriétés des renforts ainsi déformés, notamment leur module, leur potentiel de contraction et leur état de tension. Il en résulte que les renforts mis en oeuvre dans le cadre de l'invention sont, dans le pneumatique vulcanisé, sur l'ensemble de la nappe, dans un état très proche de celui du renfort adhérisé avant sa mise en pneumatique. Lors d'un roulage à basse vitesse, les renforts posés circonférentiellement, peuvent supporter des extensions de l'ordre de 1 à 2 % lors du passage dans l'aire de contact, ainsi les renforts mis en oeuvre dans le cadre de l'invention subissent ce type d'extension tout en se comportant comme des renforts de bas module.

En revanche, ces renforts, lors d'un roulage à haute vitesse, sont sollicités à plus haute déformation et réagissent alors comme des renforts de haut module. Ils peuvent alors assurer un frettage efficace du sommet qui permet de résister aux efforts dus à la centrifugation même à des vitesses très élevées.

Préférentiellement, les renforts de l'invention ont un module initial inférieur à 800 cN/tex et/ou développent une contrainte sous 3 % de déformation supérieure à 20 cN/tex.

Les propriétés mécaniques des renforts sont mesurés après un conditionnement préalable, c'est-à-dire après un stockage des renforts pendant au moins 24 heures dans une atmosphère standard selon la norme européenne DIN EN 20139 (température de 20+- 2°C, hygrométrie de 65 +- 2%).

On entend par module initial, après avoir soumis les renforts à une tension initiale égale à la demi-somme des titres de chacun des brins élémentaires (c'est-à-dire une tension initiale de 0,5 cN/tex), le module sécant mesuré sur les renforts, dans les mêmes conditions que le conditionnement, sous une déformation de 0,7 % ; les échantillons ont une longueur initiale de 400 mm et la vitesse de traction est de 200 mm/mn (ou 50 mm/mn lorsque l'allongement à la rupture est inférieur à 5%); les mesures de modules et de contraintes s'entendent comme la moyenne de dix échantillons.

De tels renforts sont constitués d'au moins un brin d'un matériau présentant un haut module (préférentiellement l'aramide mais, sans se départir de l'esprit de l'invention, on peut utiliser d'autres matériaux textiles haut module issu de polymères cristaux liquides comme par exemple le paraphénylène benzobisoxazole (PBO)) et d'au moins un brin d'un matériau présentant un faible module (préférentiellement le Nylon, mais aussi le polyéthylène téréphtalate).

Le titre de ces renforts adhérisé peut être compris entre 250 et 800 tex. Ce titre est, de préférence, supérieur à 400 tex.

Préférentiellement, les renforts orientés circonférentiellement enroulés en hélice sont disposés en une seule couche et le pas de pose de ces renforts est supérieur à 1,5 fois le diamètre des renforts.

Selon un mode de réalisation avantageux, les renforts de la nappe de renforcement du sommet présentent une orientation relativement à la direction circonferentielle variant de $\alpha_1$ dans le plan médian du sommet à $\alpha_2$ aux extrémités latérales de ladite nappe avec $\alpha_1$ - $\alpha_2$ supérieur à 3 degrés. De préférence, $\alpha_1$- $\alpha_2$ est supérieur à 8 degrés. La variation de l'angle au bord s'effectue sensiblement sur le tiers, voire les deux tiers, de la demi-largeur.

Le fait d'augmenter dans la partie centrale du pneumatique l'angle d'orientation des renforts de la nappe de renforcement du sommet augmente le gain en bruit de roulement.

Pour conserver ce gain en bruit de roulement, on a constaté qu'il est souhaitable de conserver $\alpha_1$ supérieur à 26 degrés et inférieur à 38 degrés. De préférence, on a $\alpha_1$ entre 27 et 38 degrés.

Le pas de pose de la nappe de renforts enroulés en hélice peut alors être plus faible dans les zones latérales du sommet qu'au centre du sommet du pneumatique. On entend par zone latérale de 10 à 35 % de la demi-largeur du sommet. En conséquence, la densité du frettage des renforts orientés circonférentiellement est supérieure dans les zones latérales ou les épaules du pneumatique relativement au centre. Cette configuration a l'avantage d'améliorer encore le gain de bruit de roulement et d'offrir une excellente résistance des épaules aux efforts de centrifugation même aux vitesses les plus élevées. La variation de pas de pose peut être supérieure à un facteur 1,2.

Selon une autre configuration, le pas de pose de la nappe de renforts enroulés en hélice peut être plus grand dans les zones latérales du sommet qu'au centre du sommet du pneumatique. Cela augmente la densité du frettage des renforts orientés circonférentiellement dans le centre du sommet, là où l'orientation des renforts de la nappe de renforcement relativement à la direction circonférentielle $\alpha_1$ est la plus élevée. A performance de bruit de roulement identique, cette configuration a l'avantage d'offrir un meilleur maintien du profil du pneumatique avec la vitesse. La variation de pas de pose peut être supérieure à un facteur 1,2.

La nappe de renforts enroulés sensiblement circonférentiellement en hélice peut être disposée au-dessus de la nappe de renforcement orientée avec un angle $\alpha$. Elle peut aussi être placée entre la nappe carcasse et la nappe de renforcement ou encore sous la nappe carcasse. Enfin, lorsque le sommet comprend deux nappes de renforcement orientées selon les angles $\alpha$ $\beta$ relativement à la direction circonférentielle, cette nappe de renforts circonférentiels peut être disposée entre ces deux nappes de renforcement.

Positionner les renforts orientés à 0° entre ou sous les nappes à angle à pour conséquence d'augmenter, par la flexion de mise à plat, le niveau de déformation imposée aux renforts orientés à 0°. Il est alors particulièrement avantageux d'utiliser les renforts selon l'invention dans ces configurations.

L'invention a aussi pour objet l'utilisation pour la réalisation d'un pneumatique selon l'invention de renforts selon la revendication 25.

Plusieurs modes de réalisation de l'invention sont maintenant décrits à l'aide du dessin annexé dans lequel :

- la figure 1 présente une demi-coupe axiale d'un pneumatique ;
- la figure 2 présente les courbes force allongement des trois renforts textiles décrits dans les exemples ci-après ; les courbes a et b caractérisent des renforts non conformes à l'invention, la courbe c est celle d'un renfort conforme à l'invention ;
- la figure 3 présente un éclaté du sommet d'un pneumatique ;
- la figure 4 présente un éclaté du sommet d'un autre mode de réalisation d'un pneumatique ;
- la figure 5 présente une demi-coupe axiale d'un pneumatique avec une nappe de frettage à 0 degrés disposée entre la nappe carcasse et deux nappes de renforcement croisées ;
- la figure 6 présente une demi-coupe axiale d'un pneumatique avec une nappe de frettage à 0 degrés disposée entre deux nappes de renforcement croisées ;
- la figure 7 présente une demi-coupe axiale d'un pneumatique avec une nappe de frettage à 0 degrés disposée radialement sous la nappe carcasse.

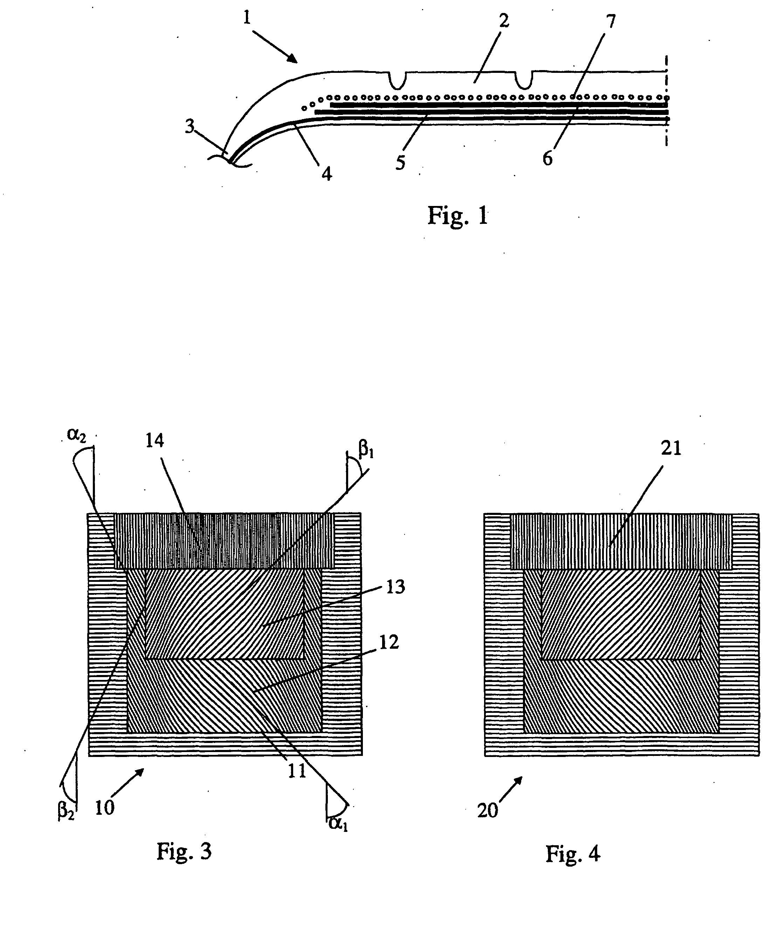

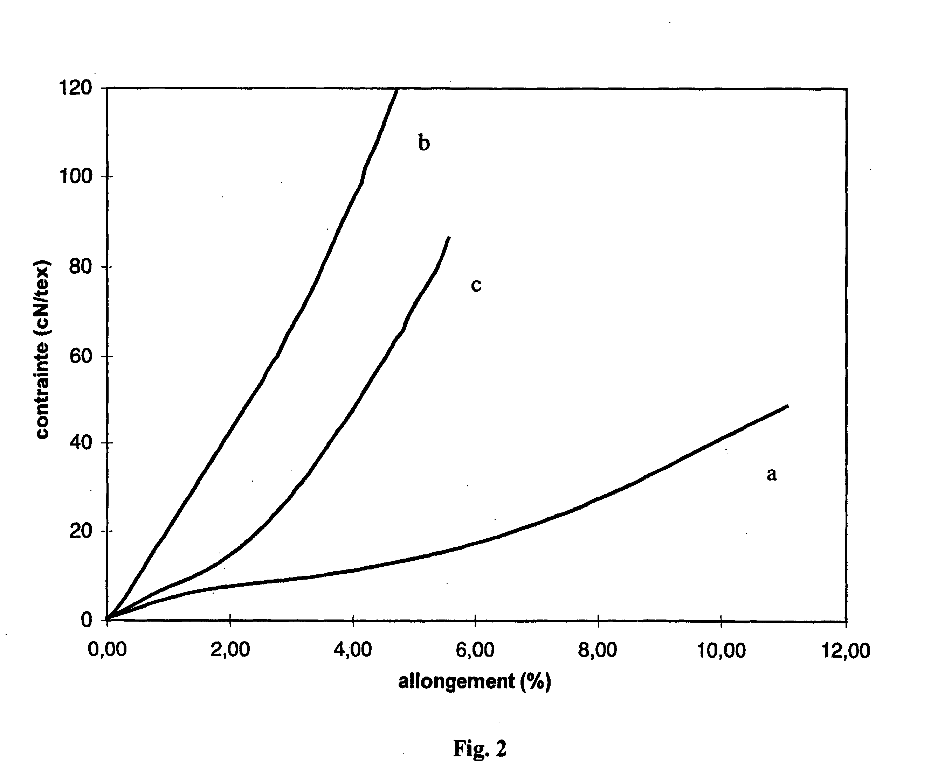

La figure 1 présente une demi-coupe axiale d'un pneumatique 1 selon l'invention. Ce pneumatique comprend un sommet 2 prolongé par deux flancs 3 et deux bourrelets non représentés. Le sommet comporte une nappe carcasse 4 ancrée de façon connue dans les deux bourrelets, deux nappes de renforcement 5 et 6 formées de renforts parallèles dans chaque nappe et croisés d'une nappe à la suivante en faisant avec la direction circonférentielle des angles ($\alpha$, $\beta$) de l'ordre de 30 degrés et une nappe de renforts orientés circonférentiellement 7. La nappe carcasse 4 est orientée sensiblement à 90 degrés relativement à la direction circonférentielle, c'est une nappe carcasse radiale.

La nappe de renforts orientés circonférentiellement 7 est composée des renforts textiles conformes à l'invention, enroulés en hélice pour assurer un bon frettage du sommet 2.

Des exemples précis d'élaboration et des propriétés de ces renforts sont fournis ci-après.

Comme décrits dans l'invention, ces renforts ont un comportement mécanique très différent aux faibles déformations où ils ont un bas module et aux déformations plus élevées où ils développent des contraintes d'extension comparables à celles de renfort de haut module d'élasticité tels les renforts aramides ou métalliques. On peut les appeler des renforts « bi-modules ». Il est connu d'utiliser de tels renforts dans le pneumatique pour assurer une fonction de frettage du sommet par enroulement circonférentiel en hélice parce que leur faible module initial leur permet de supporter les déformations de conformation des pneumatiques lors de leur confection ou de leur vulcanisation.

Cependant, l'usage et la mise en oeuvre qui en sont faits ici sont tout autres. Pour conserver le bénéfice du faible module initial dans le pneumatique vulcanisé, il convient de maîtriser la confection à cru de façon à éviter ou à contenir dans des limites faibles tout allongement provoqué par une conformation due au procédé de fabrication.

Les renforts de l'invention sont élaborés à partir de l'association d'au moins un brin d'un matériau présentant un haut module (préférentiellement l'aramide mais sans se départir de l'esprit de l'invention on peut utiliser d'autres matériaux textiles haut module issu de polymères cristaux liquides comme le paraphénylène benzobisoxazole (PBO)) et d'au moins un brin d'un matériau présentant un faible module (préférentiellement le Nylon, mais aussi le polyéthylène téréphtalate). Pour élaborer les renforts de l'invention, on applique dans une première étape, à chacun des brins élémentaires constitutifs du renfort final, une surtorsion d'un nombre de tours donné noté Z. Puis on applique simultanément à l'ensemble des brins ainsi surtordus une torsion dans la direction opposée à la direction de surtorsion d'un nombre de tour par mètre noté S. Préférentiellement la valeur de la torsion S (en nombre de tours par mètre) des retors de l'invention est telle que le coefficient de torsion

$$K = S \times \frac{\sqrt{T_i}}{\cos[(n - 2)\frac{\pi}{6}]}$$

est supérieur à 2500 et inférieur à 7000. $T_i$ est le titre du brin élémentaire de module élevé (exprimé en tex) introduit dans le retors, n est le nombre total des brins dans le retors. Préférentiellement la surtorsion des brins élémentaires Z (en nombre de tours par mètre) est telle que $Z/S \approx 1$. Les renforts sont encollés en une succession d'étapes par passage dans des bains de colle typiques de l'état de l'art et traité thermiquement sous une tension permettant de conférer au renfort le niveau de potentiel de contraction (CS) requis.

On entend par « potentiel de contraction à chaud » appelé « CS », la variation relative de longueur d'un renfort textile positionné, sous une prétension égale à la demi-somme des titres de chacun des brins élémentaires, entre les plateaux d'un four (appareil du type TESTRITE) régulé à une température constante de $185 \pm 0.5°C$. La CS est exprimée en % par la formule suivante : CS (%) = $100 \times | L_1 - L_0 | / | L_0$ où $L_0$ est la longueur initiale du renfort adhérisé, à la température ambiante sous une prétension égale à la demi somme des titres de chacun des brins élémentaires et $L_1$ la longueur de ce même renfort à $185°C$. La longueur $L_1$ est mesurée au bout d'une durée de stabilisation du renfort à la température de $185°C$, égale à 120 s $\pm$ 2 %. L'écart type sur la mesure de CS est de $\pm$ 0,15 %.

Ce potentiel est directement la conséquence de l'ensemble des opérations que le renfort a subi lors de son élaboration ou lors de sa mise en oeuvre.

Le potentiel de contraction à chaud des renforts selon l'invention avant leur incorporation dans le pneumatique est préférentiellement supérieur à 0,5 % et encore préférentiellement supérieur à 1 %.

Les renforts de la nappe 7 ont dans le pneumatique, à l'état neuf, quelle que soit leur position dans la largeur du sommet, un potentiel de contraction à chaud (CS) égal ou inférieur à leur CS avant leur incorporation dans le pneumatique 1.

Cela veut dire que, pendant toutes les opérations de confection du pneumatique, après avoir disposé les renforts de la nappe 7, ces renforts ne subissent aucune extension significative, liée à une conformation du pneumatique lors de sa confection ou lors de sa vulcanisation.

Après vulcanisation d'un pneumatique 1 selon l'invention, on a réalisé une extraction de plusieurs tronçons de renforts de la nappe 7 et on a mesuré immédiatement (c'est-à-dire que l'intervalle de temps séparant l'extraction du renfort de l'introduction de ce même renfort dans le four du TESTRITE est inférieur à 60 secondes) leur potentiel de contraction à chaud. Ces mesures ont confirmé que la valeur de leur CS est bien inférieure ou égale à celle qu'ils avaient avant leur introduction dans le pneumatique, quelle que soit leur position axiale dans le pneumatique. Des courbes force-déplacement ont aussi été effectuées sur ces tronçons extraits d'un pneumatique. Les résultats obtenus sont similaires à la courbe c de la figure 2.

Selon un premier mode de réalisation, la confection du pneumatique selon l'invention peut avantageusement être réalisée sur un noyau rigide imposant la forme de sa cavité intérieure, tels ceux décrits par EP 242 840 ou EP 822 047. On applique sur ce noyau, dans l'ordre requis par l'architecture finale, tous les constituants du pneumatique, qui sont disposés directement à leur place finale, sans subir de conformation à aucun moment de la confection. La cuisson s'effectue sur noyau, celui-ci n'étant retiré qu'après la phase de vulcanisation.

Ce mode de fabrication a l'avantage de réduire fortement voire d'éliminer les précontraintes imposées aux renforts, particulièrement à ceux orientés à 0°, lors des phases traditionnelles de conformation

On peut aussi refroidir partiellement le bandage sur le noyau pour maintenir les renforts dans l'état de déformation imposé lors de la pose.

On peut aussi, de manière équivalente, fabriquer le pneumatique sur un tambour tel que décrit dans WO 97/47 463 ou EP 718 090, à condition de faire la conformation de l'ébauche du pneumatique avant d'effectuer la pose des renforts orientés circonférentiellement.

On peut encore réaliser la pose des renforts orientés circonférentiellement sur une forme à la géométrie identique à la forme visée dans le moule de cuisson. Le bloc sommet est ensuite assemblé avec l'ébauche complémentaire du pneumatique suivant des techniques de transfert connues de l'homme de l'art, puis, toujours suivant des principes connus, le pneumatique est emboîté et mis sous pression par déploiement d'une membrane à l'intérieur du pneumatique.

Ce mode de réalisation garantit aussi l'absence de précontraintes dues à la conformation en presse de vulcanisation.

Tous ces modes de réalisation permettent d'obtenir que les renforts orientés circonférentiellement sont enroulés en hélice avec des diamètres d'hélice de pose s'écartant, sur toute la largeur du sommet 2, de moins de 0,5 % des diamètres d'hélice finaux de ces renforts dans le pneumatique après vulcanisation.

L'essai suivant permet de bien illustrer l'intérêt des pneumatiques selon l'invention.

Cet essai concerne des pneumatiques de dimension 185/75 - 14. Le bloc sommet comprend deux nappes de renforcement croisées constituées de renforts métalliques 9.28 non frettés au pas de 2,5 mm ainsi qu'une nappe de renforts orientés circonférentiellement 7 constituée de renforts conformes et non conformes à l'invention définis comme suit. Les résultats relatifs à cet essai sont regroupés dans le tableau 1.

Les trois pneumatiques de cet essai comprennent une nappe de renforcement orientée circonférentiellement dont la densité est de 80 renforts/dm.

Le pneumatique A comprend une nappe avec un renfort Nylon non conforme à l'invention. Le renfort Nylon est un retors adhérisé de titre 441 tex élaboré à partir de 2 brins Nylon identiques de 210 tex surtordus individuellement à 200 t/m (tours/mètre) puis retordus simultanément à 200 t/m dans la direction opposée. La CS du renfort Nylon est de 7 %. Le module initial de ce renfort est égal à 530 cN/tex, la contrainte développée sous 3 % est de 9 cN/tex.

Le pneumatique B comprend une nappe avec un renfort aramide non conforme à l'invention. Ce renfort est un retors adhérisé de titre égal à 376 tex élaboré à partir de 2 brins aramide identiques de 167 tex surtordus individuellement à 440 t/m puis retordus simultanément à 440 t/m dans la direction opposée. Le module initial de ce renfort est égal à 2030 cN/tex, la contrainte développée sous 3 % est de 68 cN/tex.

Le pneumatique C comprend une nappe avec un renfort bi-module conforme à l'invention. Ce renfort est un retors adhérisé de titre égal à 521 tex élaboré à partir de 2 brins aramide identiques de 167 tex surtordus individuellement à 280 t/m et d'un brin Nylon de 140 tex surtordu à 280 t/m, ces 3 brins étant ensuite retordus simultanément à 280 t/m dans la direction opposée. La CS du renfort adhérisé est égal à 1,5 %. Le module initial de ce renfort est égal à 740 cN/tex et la contrainte développée sous 3 % est égale à 30 cN/tex. Le coefficient de torsion est de 4180.

Les courbes force allongement des trois renforts testés dans cet essai sont représentés sur la figure 2:

- courbe a : renfort de Nylon ;
- courbe b : renfort aramide;
- courbe c : renfort bi-module aramide-Nylon.

Trois essais ont été réalisés pour ces pneumatiques:

- détermination de la rigidité de dérive : à vitesse, pression de gonflage et charge donnée, on impose un angle de dérive et on mesure la poussée de dérive résultante, le résultat s'exprime en faisant le rapport poussée de dérive / angle de dérive ; classiquement, la mesure est effectuée entre ± 1 degré d'angle de dérive ;
- résistance à la vitesse: à charge et pression de gonflage données, on augmente progressivement la vitesse du pneumatique jusqu'à sa destruction, le résultat du test est donné par la vitesse maximale atteinte et par l'observation de la cause de la destruction du pneumatique ;
- bruit « bord de piste » ou « coast by » : ce test est représentatif pour un riverain de la gêne acoustique provoquée au passage d'un véhicule à vitesse constante sur un sol de granulométrie intermédiaire, type autoroutier, on fait passer un véhicule, à une vitesse donnée, boîte de vitesse au point mort et moteur coupé, sur une aire de mesure normalisée (norme ISO DIS 10 844) ; des microphones enregistrent les niveaux de bruit en dB(A).

Le tableau 1 présente le type de renfort circonférentiel utilisé ainsi que les résultats des trois essais précédents.

Tableau 1

| N° | Nappe à 0° | Bruit bord de piste (60 km/h) | Résistance à la vitesse / Aspect du pneu | | Rigidité de dérive |
|---|---|---|---|---|---|
| A | Nylon | 100 | 100 | Dislocation du sommet / Fusion du Nylon | 100 |
| B | aramide | + 0.9 dB(A) | 102 | Dislocation du sommet | 115 |
| C | bi-module | 100 | 101 | Perte de pains de sculpture | 105 |

Les trois pneumatiques de l'essai présentent des résistances à haute vitesse légèrement différentes en ce qui concerne la vitesse maximale atteinte, de l'ordre de 200 km/h. Le pneumatique B avec un renfort orienté à 0° aramide atteint le plus haut niveau, puis c'est le pneumatique C avec un renfort bi-module. Il est à noter, en revanche, que les pneumatiques A et B présentent tous les deux une dislocation du sommet, alors que le pneumatique C n'a eu qu'une perte de pains de sculpture. Cela représente un avantage de performance pour la sécurité de l'utilisation en faveur du pneumatique C conforme à l'invention.

Les rigidités de dérive des trois pneumatiques sont notablement différentes, dans l'ordre des modules des renforts utilisés tels que présentés à la figure 2.

Enfin, le test de bruit de roulement met en évidence une déchéance notable du pneumatique 2 dont la nappe de renfort orientée à 0° est constituée d'aramide. On note une augmentation de 0,9 dB(A) du bruit de ce pneumatique à 60 km/h.

Ce test montre ainsi que le pneumatique C dont la nappe de renfort bi-module à 0° est constituée du renfort conforme à l'invention présente un excellent compromis entre les trois propriétés testées avec pour un même niveau de bruit, une rigidité de dérive et une résistance à la vitesse améliorées.

La figure 3 présente un éclaté d'un pneumatique selon une variante de l'invention. Ce pneumatique 10 comprend une nappe carcasse sensiblement radiale 11, deux nappes de renforcement croisées 12 et 13 ainsi qu'une nappe de renforcement à 0° 14. Les deux nappes de renforcement croisées 12 et 13 ont leur partie centrale orientée selon un angle $\alpha_1$, respectivement $\beta_1$, égal à 35 degrés et leurs deux parties latérales orientées selon des angles $\alpha_2$, respectivement $\beta_2$, égaux à 25 degrés. L'augmentation de l'angle d'orientation des renforts dans la partie centrale des nappes a un effet complémentaire positif pour le bruit de roulement bord de piste. Le pneumatique 10 de la figure 3 présente enfin une nappe de renforcement à 0° 14 dont le pas de pose du renfort est plus faible dans la partie centrale. La densité supérieure du renfort dans la zone centrale du sommet du pneumatique assure un bon frettage dans les zones où l'angle d'orientation des nappes de renforcement croisées est plus important. Ce mode de réalisation offre un très bon maintien du profil du pneumatique avec la vitesse.

La figure 4 présente un éclaté du sommet d'un pneumatique 20 similaire à celui de la figure 3. La seule différence concerne la nappe 21 de renforcement à 0° dont la variation dans la largeur du sommet du pas de pose est inverse. Le pas de pose du renfort dans les zones latérales est plus faible que dans la zone centrale du sommet. Cette configuration améliore encore le bruit de roulement en bord de piste et offre une excellente résistance des zones latérales du sommet ou épaules aux efforts de centrifugation, même à très haute vitesse.

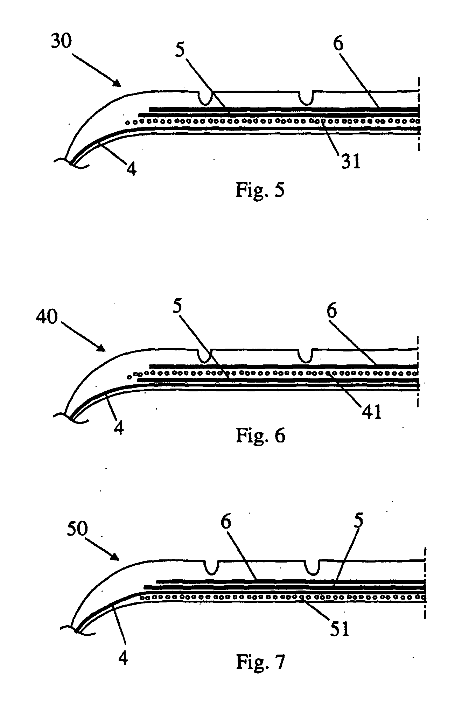

La réalisation de nappes de renforcement croisées telles que décrites dans les figures 3 et 4 peut notamment se faire en utilisant le dispositif décrit dans le brevet EP 248 301 en adaptant la courbure des guides fils correspondant à la référence 280 ou le dispositif de EP 582 215 présenté à la figure 6 en faisant varier la vitesse d'application du tronçon de renfort en fonction de son lieu d'application. Ici, il convient de légèrement augmenter la vitesse d'application du tronçon de renfort dans la partie centrale du sommet relativement à la vitesse d'application dans les deux parties latérales du sommet.

Un second essai concerne des pneumatiques de dimension 225/55 - 16 destinés à des véhicules très rapides. Le bloc sommet comprend deux nappes de renforcement croisées constituées de renforts métalliques 6.23 non frettés au pas de 1,5 mm ainsi qu'une nappe de renforts orientés circonférentiellement 7 constituée de renforts Nylon, aramide ou « bi-module ».

Le pneumatique D a ses deux nappes croisées orientées selon des angles $\alpha$, $\beta$ égaux à 27°. La nappe de renforcement à 0° est obtenue par l'enroulement en hélice d'un renfort adhérisé. Ce renfort est un retors adhérisé de titre 310 tex élaboré à partir de 2 brins Nylon identiques de 140 tex surtordus individuellement à 250 t/m puis retordus simultanément à 250 t/m dans la direction opposée. La CS du renfort Nylon est de 7 %. Le module initial de ce renfort est égal à 480 cN/tex, la contrainte développée sous 3 % est de 9 cN/tex. Pour obtenir une résistance à la vitesse acceptable, cette nappe est disposée en deux couches superposées par une technique d'enroulement en hélice d'une bande de renforts enrobés dans du caoutchouc. La densité de renfort est de 150 renforts par dm au centre et 200 renforts par dm dans les zones latérales du sommet.

Le pneumatique E a ses deux nappes croisées orientées selon des angles $\alpha_1$, $\beta_1$ égaux à 30° dans la zone centrale du sommet et $\alpha_2$, $\beta_2$ égaux à 26 degrés aux bords des nappes. La nappe de renforcement à 0° est obtenue par l'enroulement en hélice d'un renfort adhérisé non conforme à l'invention. Ce renfort est un retors adhérisé de titre 441 tex élaboré à partir de 2 brins Nylon identiques de 210 tex surtordus individuellement à 200 t/m puis retordus simultanément à 200 t/m dans la direction opposée. La CS du renfort Nylon est de 7 %. Le module initial de ce renfort est égal à 530 cN/tex, la contrainte développée sous 3 % est de 9 cN/tex. Cette nappe est disposée avec une densité de 100 renforts par dm en une seule couche.

Le pneumatique F a ses deux nappes croisées orientées selon des angles $\alpha$, $\beta$ similaires à ceux du pneumatique 2, soit avec une angulation supérieure au centre des nappes relativement aux bords. La nappe de renforcement à 0° est obtenue par l'enroulement en hélice d'un renfort adhérisé non conforme à l'invention. Ce renfort est un retors adhérisé de titre égal à 376 tex élaboré à partir de 2 brins aramide identiques de 167 tex surtordus individuellement à 440 t/m puis retordus simultanément à 440 t/m dans la direction opposée. Le module initial de ce renfort est égal à 2030 cN/tex, la contrainte développée sous 3 % est de 68 cN/tex. Cette nappe est disposée avec une densité de 90 renforts par dm en une seule couche. Le pas de pose est supérieur à 1,5 fois le diamètre du renfort.

Le pneumatique G a ses deux nappes croisées orientées selon des angles $\alpha$, $\beta$ similaires à ceux des pneumatiques E et F. La nappe de renforcement à 0° est obtenue par l'enroulement en hélice d'un renfort adhérisé bi-module conforme à l'invention. Ce renfort est un retors adhérisé de titre égal à 521 tex élaboré à partir de 2 brins aramide identiques de 167 tex surtordus individuellement à 280 t/m et d'un brin Nylon de 140 tex surtordu à 280 t/m, ces 3 brins étant ensuite retordus simultanément à 280 t/m dans la direction opposée. La CS du renfort adhérisé est égale à 1,5 %. Le module initial de ce renfort est égal à 740 cN/tex et la contrainte développée sous 3 % est égale à 30 cN/tex. Cette nappe est disposée avec une densité de 90 renforts par dm et a un pas supérieur à 1,5 fois le diamètre du renfort.

Le tableau 2 présente les résultats obtenus aux tests de résistance à la vitesse et de bruit de roulement.

Tableau 2

| N° | Nappes croisées $\alpha_1$ - $\alpha_2$ | Nappe à 0° (tex) | Densité nappe à 0° (renforts/dm) | Résistance à la vitesse | Bruit bord de piste |
|---|---|---|---|---|---|
| D | 27°- 27° | Nylon 140x2 | Bi couche - 150-200 | 100 | Ref |
| E | 30° - 26° | Nylon 210x2 | Mono couche - 100 | 80 | - 0,9 dB(A) |
| F | 30° - 26° | aramide 167x2 | Mono couche - 90 | 110 | id Ref |
| G | 30° - 26° | bi-module : <br> - aramide 167x2 <br> - Nylon 140 | Mono couche - 90 | 115 | - 0,9 dB(A) |

Le pneumatique D présente une solution classique de frettage du bloc sommet d'un pneumatique haute performance au moyen de plusieurs couches de renfort de Nylon.

Pour le pneumatique E, l'augmentation des angles $\alpha_1$, $\beta_1$ des nappes de renforcement croisées au centre du sommet, même avec une diminution de $\alpha_2$ et $\beta_2$ aux bords, associée à la diminution de densité des renforts orientés à 0°, entraîne une pénalisation très forte en résistance à la vitesse. On constate aussi une amélioration en bruit de roulement en bord de piste (pneumatique E).

Le pneumatique F a une résistance à la vitesse améliorée mais une performance en bruit de roulement demeurée identique à celle du témoin, pneumatique D.

Enfin, le pneumatique G, selon l'invention, dont la nappe de renforcement à 0° est réalisée avec un renfort bi-module présente une très forte amélioration en résistance à la vitesse couplée à une nette amélioration en bruit de roulement bord de piste.

L'invention proposée permet ainsi de concevoir un pneumatique avec des angles de nappes de renforcement croisées très ouverts amélioré en résistance à la vitesse avec une seule nappe de frettage, ainsi qu'en performance bruit bord de piste.

La figure 5 présente une demi-coupe axiale partielle d'un pneumatique 30 comportant comme précédemment une nappe carcasse 4, deux nappes de renforcement croisées 5, 6, et une nappe de renforcement à 0° 31. Dans ce pneumatique 30, la nappe 31 est disposée radialement entre les deux nappes de renforcement croisées et la nappe carcasse 4. Cette disposition a l'avantage de protéger la nappe de renforcement à 0° 31 d'éventuels dommages dus à des perforations de la bande de roulement.

Une autre disposition est présentée à la figure 6. Dans cette figure, le pneumatique 40 présente une nappe de renforcement à 0° 41 disposée entre les deux nappes de renforcement croisées 5 et 6.

Une dernière possibilité est présentée à la figure 7. Ce pneumatique 50 présente une nappe de renforcement à 0° 51 disposée radialement sous la nappe carcasse 4.

Pour ces trois configurations, bien que lors du roulage dans l'aire de contact, les efforts de flexion vont entraîner une mise en tension plus importante des renforts de ces nappes 31, 41 et 51, il est très avantageux d'utiliser les renforts de l'invention pour améliorer les performances de résistance à la vitesse et de bruit de roulement bord de piste.

Il est à noter que tous les modes de réalisation de l'invention ont été décrits en considérant des architectures de sommet comportant deux nappes de renforcement constituées de renforts orientés avec des angles $\alpha$, $\beta$, relativement à la direction circonférentielle. L'invention s'applique aussi à des architectures de sommet comportant seulement une nappe de renforcement à angle ainsi qu'à toute architecture comportant plus de deux nappes de renforcement croisées.

**Revendications**

**1.** Pneumatique comportant un sommet prolongé par deux flancs et deux bourrelets, une carcasse ancrée dans les deux bourrelets, ledit sommet comprenant:

- au moins une nappe de renforcement composée de renforts parallèles et orientés selon un angle $\alpha$ relativement à la direction circonférentielle, et
- - au moins une nappe de renforts orientés circonférentiellement enroulés en hélice, **caractérisé en ce que**, extraits du pneumatique vulcanisé, lesdits renforts orientés circonférentiellement possèdent un module initial inférieur à 900 cN/tex et développent une contrainte sous 3 % de déformation supérieure à 12 cN/tex.

2. Pneumatique selon la revendication 1, dans lequel lesdits renforts orientés circonférentiellement sont des renforts textiles.

3. Pneumatique selon l'une des revendications 1 et 2, dans lequel ledit angle $\alpha$ est compris entre 10 et 45 degrés.

4. Pneumatique selon l'une des revendications 1 à 3, tel que, extraits du pneumatique vulcanisé, lesdits renforts orientés circonférentiellement possèdent, quelle que soit leur position axiale, un potentiel de contraction à chaud (CS) inférieur ou égal au potentiel de contraction à chaud mesuré sur lesdits renforts avant leur incorporation dans le pneumatique.

5. Pneumatique selon l'une des revendications 1 à 4, dans lequel lesdits renforts orientés circonférentiellement ont un module initial inférieur à 800 cN/tex.

6. Pneumatique selon l'une des revendications 1 à 5, dans lequel lesdits renforts orientés circonférentiellement développent une contrainte sous 3 % de déformation supérieure à 20 cN/tex.

7. Pneumatique selon l'une des revendications 1 à 6, dans lequel lesdits renforts orientés circonférentiellement sont constitués d'un assemblage d'au moins un brin de Nylon associé à au moins un brin aramide.

8. Pneumatique selon l'une des revendications 1 à 7, dans lequel lesdits renforts orientés circonférentiellement ont un titre adhérisé supérieur à 250 tex et inférieur à 800 tex.

9. Pneumatique selon la revendication 8, dans lequel lesdits renforts orientés circonférentiellement ont un titre adhérisé supérieur à 400 tex.

10. Pneumatique selon l'une des revendications 1 à 9, dans lequel les renforts orientés circonférentiellement enroulés en hélice sont disposés en une seule couche.

11. Pneumatique selon la revendication 10, dans lequel le pas de pose desdits renforts orientés circonférentiellement enroulés en hélice est supérieur à 1,5 fois le diamètre desdits renforts.

12. Pneumatique selon l'une des revendications 1 à 11, dans lequel les renforts de la nappe de renforcement du sommet présentent une orientation relativement à la direction circonférentielle variant de $\alpha_1$ dans le plan médian du sommet à $\alpha_2$ aux extrémités latérales de ladite nappe avec $\alpha_1 - \alpha_2$ supérieur à 3 degrés.

13. Pneumatique selon la revendication 12, dans lequel $\alpha_1 - \alpha_2$ est supérieur à 8 degrés.

14. Pneumatique selon l'une des revendications 12 ou 13, dans lequel $\alpha_1$ est supérieur à 26 degrés et inférieur à 38 degrés.

15. Pneumatique selon l'une des revendications 12 à 14, dans lequel le pas de pose de la nappe de renforts enroulés en hélice est plus faible dans les zones latérales du sommet qu'au centre du sommet dudit pneumatique.

16. Pneumatique selon la revendication 15, dans lequel le pas de pose de la nappe de renforts enroulés en hélice est au moins 1,2 fois plus faible dans les zones latérales du sommet qu'au centre du sommet du pneumatique.

17. Pneumatique selon l'une des revendications 12 ou 13, dans lequel le pas de pose de la nappe de renforts enroulés en hélice est plus grand dans les zones latérales du sommet qu'au centre du sommet dudit pneumatique.

18. Pneumatique selon la revendication 17, dans lequel le pas de pose de la nappe de renforts enroulés en hélice est au moins 1,2 fois plus élevé dans les zones latérales du sommet qu'au centre du sommet du pneumatique.

19. Pneumatique selon l'une des revendications 1 à 18, dans lequel ladite nappe de renforts enroulés en hélice est disposée radialement au-dessus de ladite nappe de renforcement du sommet.

20. Pneumatique selon l'une des revendications 1 à 18, dans lequel ladite nappe de renforts enroulés en hélice est disposée directement radialement extérieurement à ladite nappe carcasse.

21. Pneumatique selon l'une des revendications 1 à 18, dans lequel ledit sommet comprend au moins deux nappes de renforcement superposées formées de renforts parallèles dans chaque nappe et croisés d'une nappe à la suivante en faisant avec la direction circonférentielle des angles ($\alpha$, $\beta$) compris entre 10 et 45 degrés, et dans lequel ladite nappe de renforts enroulés en hélice est disposée radialement entre lesdites deux nappes de renforcement du sommet.

22. Pneumatique selon l'une des revendications 1 à 18, dans lequel ladite nappe de renforts enroulés en hélice est disposée radialement intérieurement relativement à ladite carcasse.

23. Procédé de fabrication d'un pneumatique selon l'une des revendications 1 à 22, tel que lesdits renforts orientés circonférentiellement sont enroulés en hélice avec des diamètres d'hélice de pose correspondant sensiblement, sur toute la largeur du sommet, aux diamètres d'hélice finaux desdits renforts dans le pneumatique après vulcanisation.

24. Procédé selon la revendication 23, dans lequel lesdits renforts orientés circonférentiellement sont enroulés en hélice avec des diamètres d'hélice de pose s'écartant, sur toute la largeur du sommet, de moins de 0,5 % des diamètres d'hélice finaux desdits renforts dans le pneumatique après vulcanisation.

25. Utilisation pour la réalisation d'un pneumatique selon l'une des revendications 1 à 22 de renforts possédant un module initial inférieur à 900 cN/tex et développant une contrainte sous 3 % de déformation supérieure à 12 cN/tex.

**Patentansprüche**

1. Reifen mit einem Scheitel, der durch zwei Flanken und zwei Wülste verlängert ist, und einer Karkasse, die in den beiden Wülsten verankert ist, wobei der genannte Scheitel

   - mindestens eine Verstärkungslage, die aus parallelen und in einem Winkel $\alpha$ bezüglich der Umfangsrichtung ausgerichteten Verstärkungen zusammengesetzt ist, und
   - mindestens eine Lage aus in Umfangsrichtung ausgerichteten, wendelförmigen Verstärkungen aufweist,

   **dadurch gekennzeichnet, daß**, am vulkanisierten Reifen bestimmt, die genannten, in Umfangsrichtung ausgerichteten Verstärkungen ein anfängliches Modul besitzen, das kleiner als 900 cN/tex ist, und unter 3% Verformung eine Spannung von mehr als 12 cN/tex entwickeln.

2. Reifen nach Anspruch 1, worin die genannten, in Umfangsrichtung ausgerichteten Verstärkungen textile Verstärkungen sind.

3. Reifen nach einem der Ansprüche 1 und 2, worin der genannten Winkel $\alpha$ zwischen 10 und 45 Grad liegt.

4. Reifen nach einem der Ansprüche 1 bis 3, so daß, am vulkanisierten Reifen bestimmt, die genannten, in Umfangsrichtung ausgerichteten Verstärkungen, gleichgültig, wie ihre axiale Lage auch ist, ein Potential der Kontraktion bei Wärme (CS) besitzen, das kleiner oder gleich dem Potential der Kontraktion bei Wärme ist, die an den genannten Verstärkungen vor ihrer Einbeziehung in den Reifen gemessen ist.

5. Reifen nach einem der Ansprüche 1 bis 4, worin die genannten, in Umfangsrichtung ausgerichteten Verstärkungen ein anfängliches Modul besitzen, das kleiner als 800 cN/tex ist.

6. Reifen nach einem der Ansprüche 1 bis 5, worin die genannten, in Umfangsrichtung ausgerichteten Verstärkungen unter 3% Verformung eine Spannung von mehr als 20 cN/tex entwickeln.

7. Reifen nach einem der Ansprüche 1 bis 6, worin die genannten, in Umfangsrichtung ausgerichteten Verstärkungen aus einer Anordnung aus mindestens einer Nylonfaser gebildet sind, denen mindestens eine Aramidfaser zugeordnet ist.

8. Reifen nach einem der Ansprüche 1 bis 7, worin die genannten, in Umfangsrichtung ausgerichteten Verstärkungen einen Titer haben, der, haftbar gemacht, mehr als 250 tex und weniger als 800 tex beträgt.

9. Reifen nach Anspruch 8, worin die genannten, in Umfangsrichtung ausgerichteten Verstärkungen einen Titer haben, der, haftbar gemacht, mehr als 400 tex beträgt.

10. Reifen nach einem der Ansprüche 1 bis 9, worin die in Umfangsrichtung ausgerichteten, wendelförmig aufgewikkelten Verstärkungen in einer einzigen Schicht angeordnet sind.

11. Reifen nach Anspruch 10, worin die Verlegeteilung der in Umfangsrichtung ausgerichteten, wendelförmig aufgewickelten Verstärkungen größer als das 1,5-fache des Durchmessers der genannten Verstärkungen ist.

12. Reifen nach einem der Ansprüche 1 bis 11, worin die Verstärkungen der Scheitel-Verstärkungslage relativ zu einer Umfangsrichtung eine Ausrichtung aufweisen, die sich von $\alpha_1$ in der Mittelebene des Scheitels bis zu $\alpha_2$ an den seitlichen Enden der genannten Lage ändert, wobei $\alpha_1$ - $\alpha_2$ größer ist als 3 Grad.

13. Reifen nach Anspruch 12, worin $\alpha_1$ - $\alpha_2$ größer ist als 8 Grad.

14. Reifen nach einem der Ansprüche 12 oder 13, worin $\alpha_1$ größer ist als 26 Grad und kleiner als 38 Grad.

15. Reifen nach einem der Ansprüche 12 bis 14, worin die Verlegeteilung der Lage der in Umfangsrichtung ausgerichteten, wendelförmig aufgewikkelten Verstärkungen in den seitlichen Zonen des Scheitels geringer ist als in der Mitte des Scheitels des genannten Reifens.

16. Reifen nach Anspruch 15, worin die Verlegeteilung der Lage der in Umfangsrichtung ausgerichteten, wendelförmig aufgewickelten Verstärkungen in den seitlichen Zonen des Scheitels mindestens um das 1,2-fache geringer ist als in der Mitte des Scheitels des Reifens.

17. Reifen nach einem der Ansprüche 12 oder 13, worin die Verlegeteilung der Lage der in Umfangsrichtung ausgerichteten, wendelförmig aufgewickelten Verstärkungen in den seitlichen Zonen des Scheitels größer ist als in der Mitte des Scheitels des genannten Reifens.

18. Reifen nach Anspruch 17, worin die Verlegeteilung der Lage der in Umfangsrichtung ausgerichteten, wendelförmig aufgewickelten Verstärkungen in den seitlichen Zonen des Scheitels mindestens um das 1,2-fache höher ist als in der Mitte des Scheitels des Reifens.

19. Reifen nach einem der Ansprüche 1 bis 18, worin die genannte Lage der in Umfangsrichtung ausgerichteten, wendelförmig aufgewickelten Verstärkungen radial über der genannten Scheitelverstärkungslage angeordnet ist.

20. Reifen nach einem der Ansprüche 1 bis 18, worin die genannte Lage der in Umfangsrichtung ausgerichteten, wendelförmig aufgewickelten Verstärkungen radial unmittelbar außerhalb der genannten Karkassenlage angeordnet ist.

21. Reifen nach einem der Ansprüche 1 bis 18, worin der genannte Scheitel mindestens zwei übereinanderliegende Verstärkungslagen aufweist, die aus in jeder Lage parallelen und von einer Lage zur folgenden überkreuz laufenden Verstärkungen gebildet sind, wobei sie zur Umfangsrichtung Winkel ($\alpha$, $\beta$) bilden, die zwischen 10 und 45 Grad liegen, und worin die genannte Lage aus wendelförmig aufgewickelten Verstärkungen radial zwischen den genannten beiden Scheitelverstärkungslagen angeordnet ist.

22. Reifen nach einem der Ansprüche 1 bis 18, worin die genannte Lage aus wendelförmig aufgewickelten Verstärkungen, bezüglich der genannten Karkasse, radial innerhalb angeordnet ist.

23. Verfahren zur Herstellung eines Reifens nach einem der Ansprüche 1 bis 22, so daß die genannten, in Umfangsrichtung ausgerichteten Verstärkungen wendelförmig aufgerollt sind, mit Wendel-Verlegedurchmessern, die über die ganze Breite des Scheitels im wesentlichen den endgültigen Wendeldurchmessern der genannten Verstärkungen im Reifen nach der Vulkanisierung entsprechen.

**24.** Verfahren nach Anspruch 23, worin die genannten, in Umfangsrichtung ausgerichteten Verstärkungen wendelförmig aufgerollt sind, mit Wendel-Verlegedurchmessem, die über sich die ganze Breite des Scheitels um mindestens 0,5% der endgültigen Wendeldurchmesser der genannten Verstärkungen im Reifen nach der Vulkanisierung auseinanderspreizen.

**25.** Verwendung von Verstärkungen für die Herstellung eines Reifens nach einem der Ansprüche 1 bis 22, wobei die Verstärkungen ein anfängliches Modul besitzen, das kleiner als 900 cN/tex ist, und unter 3% Verformung eine Spannung von mehr als 12 cN/tex entwickeln.

**Claims**

**1.** Tyre comprising a crown extended by two sidewalls and two beads, and a carcass anchored in both beads, said crown comprising:

- at least one reinforcing ply composed of parallel reinforcing threads oriented at an angle $\alpha$ to the circumferential direction, and

- at least one ply of spiral-wound circumferentially oriented reinforcing threads,

**characterised in that**, when extracted from the vulcanised tyre, said circumferentially oriented reinforcing threads possess an initial modulus less than 900 cN/tex and develop a stress under 3% deformation exceeding 12 cN/tex.

**2.** Tyre according to Claim 1, in which said circumferentially oriented reinforcing threads are textile reinforcing threads.

**3.** Tyre according to one of Claims 1 and 2, in which said angle $\alpha$ is of between 10 and 45 degrees.

**4.** Tyre according to one of Claims 1 to 3, such that, when they are extracted from the vulcanised tyre, said circumferentially oriented reinforcing threads have, whatever their axial position, a high-temperature contraction potential (CS) less than or equal to the high-temperature contraction potential measured on said reinforcing threads before their incorporation in the tyre.

**5.** Tyre according to one of Claims 1 to 4, in which said circumferentially oriented reinforcing threads have an initial modulus less than 800 cN/tex.

**6.** Tyre according to one of Claims 1 to 5, in which said circumferentially oriented reinforcing threads develop a stress under 3% deformation exceeding 20 cN/tex.

**7.** Tyre according to one of Claims 1 to 6, in which said circumferentially oriented reinforcing threads consist of an assembly of at least one nylon strand combined with at least one aramid strand.

**8.** Tyre according to one of Claims 1 to 7, in which said circumferentially oriented reinforcing threads have an adhesive titre greater than 250 tex and less than 800 tex.

**9.** Tyre according to Claim 8, in which said circumferentially oriented reinforcing threads have an adhesive titre greater than 400 tex.

**10.** Tyre according to one of Claims 1 to 9, in which the spiral-wound circumferentially oriented reinforcing threads are arranged in a single layer.

**11.** Tyre according to Claim 10, in which the laying pitch of said spiral-wound circumferentially oriented reinforcing threads is greater than 1.5 times the diameter of said reinforcing threads.

**12.** Tyre according to one of Claims 1 to 11, in which the reinforcing threads of the crown reinforcing ply present an orientation relative to the circumferential direction varying from $\alpha_1$ in the midplane of the crown to $\alpha_2$ at the lateral ends of said ply with $\alpha_1 - \alpha_2$ exceeding 3 degrees.

**13.** Tyre according to Claim 12, in which $\alpha_1$ - $\alpha_2$ exceeds 8 degrees.

**14.** Tyre according to one of Claims 12 or 13, in which $\alpha_1$ is greater than 26 degrees and less than 38 degrees.

**15.** Tyre according to one of Claims 12 to 14, in which the laying pitch of the ply of spiral-wound reinforcing threads is less in the lateral zones of the crown than in the centre of the crown of said tyre.

**16.** Tyre according to Claim 15, in which the laying pitch of the ply of spiral-wound reinforcing threads is at least 1.2 times less in the lateral zones of the crown than in the centre of the crown of said tyre.

**17.** Tyre according to one of Claims 12 or 13, in which the laying pitch of the ply of spiral-wound reinforcing threads is greater in the lateral zones of the crown than in the centre of the crown of said tyre.

**18.** Tyre according to Claim 17, in which the laying pitch of the ply of spiral-wound reinforcing threads is at least 1.2 times greater in the lateral zones of the crown than in the centre of the tyre crown.

**19.** Tyre according to one of Claims 1 to 18, in which said ply of spiral-wound reinforcing threads is arranged radially above said crown reinforcing ply.

**20.** Tyre according to one of Claims 1 to 18, in which said ply of spiral-wound reinforcing threads is placed directly radially outside said carcass ply.

**21.** Tyre according to one of Claims 1 to 18, in which said crown comprises at least two superposed reinforcing plies formed by reinforcing threads which are parallel in each ply and crossed from one ply to the next, forming angles ($\alpha$, $\beta$) with the circumferential direction ranging between 10 and 45 degrees, and in which said ply of spiral-wound reinforcing threads is arranged radially between said two crown reinforcing plies.

**22.** Tyre according to one of Claims 1 to 18, in which said ply of spiral-wound reinforcing threads is arranged radially inside said carcass.

**23.** Method for manufacturing a tyre according to one of Claims 1 to 22, such that said circumferentially oriented reinforcing threads are spiral-wound with laying helix diameters corresponding substantially, over the whole width of the crown, to the final helix diameters of said reinforcing threads in the tyre after vulcanisation.

**24.** Method according to Claim 23, in which said circumferentially arranged reinforcing threads are spiral-wound with laying helix diameters deviating, over the whole width of the crown, by less than 0.5% from the final helix diameters of said reinforcing threads in the tyre after vulcanisation.

**25.** Use of reinforcing threads having an initial modulus of less than 900 cN/tex and developing a stress under 3% deformation greater than 12 cN/tex for the manufacture of a tyre according to one of Claims 1 to 22.

Fig. 1

Fig. 3

Fig. 4

Fig. 2

Fig. 5

Fig. 6

Fig. 7